# EUROPEAN PATENT APPLICATION

(11) **EP 3 179 652 A1**
(43) Date of publication of application: **14.06.2017**
(21) Application number: 15830681.1
(22) Date of filing: 14.04.2015
(51) Int. Cl.: H04L 1/00

(54) **METHOD FOR CONTROLLING TRANSMISSION OF CHANNEL STATE INFORMATION, BASE STATION, TERMINAL AND STORAGE MEDIUM**

(30) Priority: 04.08.2014 CN 201410379551
(71) Applicant: ZTE Corporation, Shenzhen, Guangdong 518057 (CN)
(72) Inventor: LIANG, Chunli, Shenzhen Guangdong 518057 (CN); DAI, Bo, Shenzhen Guangdong 518057 (CN); YANG, Weiwei, Shenzhen Guangdong 518057 (CN)
(74) Representative: Brevalex
(86) International application number: PCT/CN2015/076555
(87) International publication number: WO 2016/019738

(57) **Abstract**

Disclosed is a method for controlling sending of channel state information, in which an evolved Node B sends downlink control information containing Aperiodic Channel State Information (A-CSI) triggering signalling. The A-CSI triggering signalling is employed by the evolved Node B to trigger reporting of A-CSI on a downlink Frequency Division Duplexing (FDD) spectrum and/or an uplink FDD spectrum.

## Description

### TECHNICAL FIELD

The disclosure relates to the technical field of mobile communication, and particularly to a method for controlling sending of channel state information, an evolved Node B, User Equipment (UE) and a storage medium.

### BACKGROUND

Traditional cellular communication systems are usually designed for voice services. A hypothesis on voice services is that a service load is almost unchanged, namely: relatively static or semi-statically changing, and uplink and downlink services are symmetrically proportional, for example, a Frequency Division Duplexing (FDD) system uses paired uplink and downlink spectrums. However, such relatively static uplink and downlink frequency resource allocation in a Long Term Evolution (LTE) system may not be well adapted to service changes.

Along with rapid development of a Mobile BroadBand (MBB) service in recent years, people's requirements on radio communication continuously increase, more and more application services have such a characteristic that a downlink service requirement is higher than an uplink service requirement, and the uplink service requirement is higher than the downlink service requirement in some specific scenarios. A table shows uplink and downlink rate ratios of some typical applications, for example: for online videos, software downloading, webpage browsing and the like, downlink services generally prevail, while for social networks, Point to Point (P2P) videos and the like, uplink services generally prevail.

**Table 1 Uplink and Downlink Rate Ratios for Different Types of Services**

| Service type | Uplink/downlink rate ratio (average) |
|---|---|
| Online video | 1:37 |
| Software downloading | 1:22 |
| Webpage browsing | 1:9 |
| Social network | 4:1 |
| Electronic mail | 1:4 |
| P2P video | 3:1 |

Two existing duplexing manners are: FDD and Time Division Duplexing (TDD). For FDD, the need of paired spectrums makes resource utilization inflexible. In consideration of uplink and downlink asymmetry of existing services, i.e., most of the services are mainly downlink services, utilization of an uplink spectrum is relatively lower, and there may often be a large number of unused uplink spectrum resources. For TDD, spectrum resources may be used in a time division manner, and thus utilization of the resources is higher than that of FDD. In order to integrate respective advantages of the two duplexing manners and take account of backward compatibility, a trend of a duplexing technology in the future is to integrate FDD and TDD. A duplexing manner, called flexible duplex, emerges, that is, a part of flexible sub-frames are defined in a frame structure, and uplink and downlink sub-frame switching may be dynamically performed on these flexible sub-frames. For example, downlink data transmission may be performed on an uplink FDD spectrum.

In this case, since downlink transmission is to be performed on an uplink FDD spectrum, for ensuring quality of downlink transmission, UE is required to feed back channel state information to ensure proper scheduling of an evolved Node B. Therefore, sending of channel state information is a problem urgent to be solved in the flexible duplex technology.

### SUMMARY

In view of the above, embodiments of the disclosure provide a method for controlling sending of channel state information, an evolved Node B, UE and a storage medium.

An embodiment of the disclosure provides a method for controlling sending of channel state information, which may include sending, by an evolved Node B, downlink control information containing Aperiodic Channel State Information (A-CSI) triggering signalling, the A-CSI triggering signalling being employed by the evolved Node B to trigger reporting of A-CSI on at least one of a downlink Frequency Division Duplexing (FDD) spectrum or an uplink FDD spectrum.

In the above solution, the method may further include: when the A-CSI triggering signalling is 1-bit, dividing, by the evolved Node B, downlink sub-frames for sending the downlink control information into multiple sub-frame groups, and when the A-CSI triggering signalling sent in different sub-frame groups is enabled, triggering, by the evolved Node B, reporting of corresponding different A-CSI through the A-CSI triggering signalling.

In the above solution, the step that the evolved Node B sends the downlink control information containing the A-CSI triggering signalling may include: sending, by the evolved Node B, the downlink control information by using at least one of downlink sub-frames of the uplink FDD spectrum or downlink sub-frames of the downlink FDD spectrum.

In the above solution, the method may further include: determining, by the evolved Node B, grouping of the downlink sub-frames of the downlink FDD spectrum or downlink sub-frames of the uplink FDD spectrum, which are used for sending the downlink control information, in a preset manner.

In the above solution, the method may further include: notifying, by the evolved Node B through high-layer signalling, User Equipment (UE) of grouping of the downlink sub-frames of the downlink FDD spectrum or downlink sub-frames of the uplink FDD spectrum, which are used for sending the downlink control information.

In the above solution, the method for the evolved Node B to determine grouping of the downlink sub-frames may include:
when the downlink sub-frames of the downlink FDD spectrum or the downlink sub-frames of the uplink FDD spectrum are to be divided into two groups, setting, by the evolved Node B, the sub-frames of which downlink sub-frame indexes are even numbers into a sub-frame group 0, and setting the sub-frames of which downlink sub-frame indexes are odd numbers into a sub-frame group 1; or,
when the downlink sub-frames of the downlink FDD spectrum or the downlink sub-frames of the uplink FDD spectrum are to be divided into three groups, setting, by the evolved Node B, the sub-frames of which the downlink sub-frame indexes are subjected to modulo-3 operation to obtain remainders 0 into a sub-frame group 0, setting the sub-frames of which the downlink sub-frame indexes are subjected to modulo-3 operation to obtain remainders 1 into a sub-frame group 1, and setting the sub-frames of which the downlink sub-frame indexes are subjected to modulo-3 operation to obtain remainders 2 into a sub-frame group 2; or,
when the downlink sub-frames of the downlink FDD spectrum are to be divided into two groups, setting, by the evolved Node B, the downlink sub-frames of the downlink FDD spectrum with the same sub-frame indexes with the downlink sub-frames of the uplink FDD spectrum into a sub-frame group 0, and setting the downlink sub-frames of the downlink FDD spectrum with the same sub-frame indexes with uplink sub-frames of the uplink FDD spectrum into a sub-frame group 1; or,
when the downlink sub-frames of the downlink FDD spectrum are to be divided into three groups, setting, by the evolved Node B, the downlink sub-frames of the downlink FDD spectrum with the same sub-frame indexes with the downlink sub-frames of the uplink FDD spectrum into a sub-frame group 0; and for other ungrouped downlink sub-frames of the downlink FDD spectrum, setting the downlink sub-frames of which the downlink sub-frame indexes are even numbers into a sub-frame group 1, and setting the sub-frames of which the downlink sub-frame indexes are odd numbers into a sub-frame group 2.

In the above solution, the method may further include: when a number of the downlink sub-frames of the downlink FDD spectrum or downlink sub-frames of the uplink FDD spectrum, which are configured to send the downlink control information containing the A-CSI triggering signalling, is 1, and the A-CSI triggering signalling is enabled, triggering, by the evolved Node B through the A-CSI triggering signalling, reporting of the A-CSI on the downlink FDD spectrum and the uplink FDD spectrum.

In the above solution, the method for the evolved Node B to trigger reporting of different A-CSI through the A-CSI triggering signalling when the A-CSI triggering signalling sent on different sub-frame groups is enabled may include:
a manner 1: feeding back downlink channel state information corresponding to the downlink sub-frames in which the A-CSI triggering signalling is located; or,
a manner 2: feeding back downlink channel state information of downlink sub-frames of the uplink spectrum/downlink spectrum corresponding to the downlink sub-frames of the downlink spectrum/uplink spectrum in which the A-CSI triggering signalling is located; or,
a manner 3: feeding back the downlink channel state information of both the downlink spectrum and uplink spectrum corresponding to the downlink sub-frames in which the A-CSI triggering signalling is located.

In the above solution, in the case that the downlink sub-frames are divided into two sub-frame groups, the reporting for different A-CSI is performed in the manner 1 when the A-CSI triggering signalling sent in the sub-frame group 0 is enabled, and the reporting for different A-CSI is performed in the manner 2 when the A-CSI triggering signalling sent in the sub-frame group 1 is enabled; or, the reporting for different A-CSI is performed in the manner 3 when the A-CSI triggering signalling sent in the sub-frame group 0 is enabled, and the reporting for different A-CSI is performed in the manner 1 when the A-CSI triggering signalling sent in the sub-frame group 1 is enabled.

In the above solution, in the case that the downlink sub-frames are divided into three sub-frame groups, the reporting for different A-CSI is performed in the manner 3 when the A-CSI triggering signalling sent in the sub-frame group 0 is enabled, the reporting for different A-CSI is performed in the manner 1 when the A-CSI triggering signalling sent in the sub-frame group 1 is enabled, and the reporting for different A-CSI is performed in the manner 2 when the A-CSI triggering signalling sent in the sub-frame group 3 is enabled.

In the above solution, the step that the downlink sub-frames of the downlink FDD spectrum or the downlink sub-frames of the uplink FDD spectrum are grouped may include:
when a number of the downlink sub-frames of the downlink FDD spectrum or downlink sub-frames of the uplink FDD spectrum, which are configured to send the downlink control information containing the A-CSI triggering signalling, is 2, dividing the sub-frames into two sub-frame groups; and
when the number of the downlink sub-frames of the downlink FDD spectrum or downlink sub-frames of the uplink FDD spectrum, which are configured to send the downlink control information containing the A-CSI triggering signalling, exceeds 2, dividing the sub-frames into two or three sub-frame groups.

In the above solution, when the A-CSI triggering signalling is 2-bit, the A-CSI triggering signalling may have four different values, and four corresponding manners for triggering reporting of the A-CSI may at least include:
not triggering reporting of the A-CSI, triggering reporting of the A-CSI on the downlink FDD spectrum, triggering reporting of the A-CSI on the uplink FDD spectrum, and triggering reporting of the A-CSI on both the downlink FDD spectrum and the uplink FDD spectrum; or,
not triggering reporting of the A-CSI, triggering reporting of the A-CSI on the downlink FDD spectrum, and triggering reporting of the A-CSI on the uplink FDD spectrum; or,
not triggering reporting of the A-CSI, triggering reporting of the A-CSI in a high-layer configured sub-frame group 1, triggering reporting of the A-CSI in a high-layer configured sub-frame group 2, and triggering reporting of the A-CSI in a high-layer configured sub-frame group 3.

In the above solution, downlink sub-frames in the high-layer configured sub-frame groups may include: the downlink sub-frames of at least one of the uplink FDD spectrum or the downlink sub-frames of the downlink FDD spectrum.

In the above solution, when the downlink control information containing the A-CSI triggering signalling can be sent on the uplink FDD spectrum and on the downlink FDD spectrum, triggering, by the evolved Node B through the A-CSI triggering signalling, reporting of different A-CSI may include:
triggering, by the evolved Node B through the A-CSI triggering signalling, reporting of the A-CSI on the uplink FDD spectrum, when the A-CSI triggering signalling sent in the downlink sub-frames of the uplink FDD spectrum is enabled, and triggering, by the evolved Node B, reporting of the A-CSI on the downlink FDD spectrum through the A-CSI triggering signalling, when the A-CSI triggering signalling sent in the downlink sub-frames of the downlink FDD spectrum is enabled; or,
triggering, by the evolved Node B through the A-CSI triggering signalling, reporting of the A-CSI on the uplink FDD spectrum and the downlink FDD spectrum, when the A-CSI triggering signalling sent in the downlink sub-frames of the uplink FDD spectrum is enabled, and triggering, by the evolved Node B through the A-CSI triggering signalling, reporting of the A-CSI on the downlink FDD spectrum, when the A-CSI triggering signalling sent in the downlink sub-frames of the downlink FDD spectrum is enabled; or,
triggering, by the evolved Node B through the A-CSI triggering signalling, reporting of the A-CSI on the uplink FDD spectrum and the downlink FDD spectrum, when the A-CSI triggering signalling sent in the downlink sub-frames of the downlink FDD spectrum is enabled, and triggering, by the evolved Node B through the A-CSI triggering signalling, reporting of the A-CSI on the uplink FDD spectrum, when the A-CSI triggering signalling sent in the downlink sub-frames of the uplink FDD spectrum is enabled; or,
triggering, by the evolved Node B through the A-CSI triggering signalling, reporting of the A-CSI on the uplink FDD spectrum, when the A-CSI triggering signalling sent in the downlink sub-frames of the uplink FDD spectrum is enabled, triggering, by the evolved Node B through the A-CSI triggering signalling, reporting of the A-CSI on the downlink FDD spectrum and the uplink FDD spectrum, when the A-CSI triggering signalling sent in the downlink sub-frames of the downlink FDD spectrum with the same sub-frame indexes with the downlink sub-frames of the uplink FDD spectrum is enabled, and triggering, by the evolved Node B through the A-CSI triggering signalling, reporting of the A-CSI on the downlink FDD spectrum, when the A-CSI triggering signalling sent in the downlink sub-frames of the downlink FDD spectrum with the same sub-frame indexes with the uplink sub-frames of the uplink FDD spectrum is enabled.

The embodiment of the disclosure also provides a storage medium, which may include a set of instructions, which, when being executed, cause at least one processor to execute the abovementioned operations executed by the evolved Node B.

The embodiment of the disclosure provides a method for controlling sending of channel state information, which may include: receiving, by a User Equipment (UE), downlink control information containing Aperiodic Channel State Information (A-CSI) triggering signalling, the A-CSI triggering signalling being employed by an evolved Node B to trigger reporting of A-CSI on at least one of a downlink Frequency Division Duplexing (FDD) spectrum or an uplink FDD spectrum.

In the above solution, the method may further include: receiving, by the UE, grouping, notified by the evolved Node B through high-layer signalling, of downlink sub-frames of the downlink FDD spectrum or downlink sub-frames of the uplink FDD spectrum, which are used for sending the downlink control information.

In the above solution, the method may further include: determining, by the UE, grouping of the downlink sub-frames of the downlink FDD spectrum or downlink sub-frames of the uplink FDD spectrum, which are used for sending the downlink control information, in a preset manner negotiated with the evolved Node B.

The embodiment of the disclosure also provides a storage medium, which may include a set of instructions, which, when being executed, cause at least one processor to execute the abovementioned operations executed by the UE.

The embodiment of the disclosure provides an evolved Node B, which may include: a sending module, configured to send downlink control information containing A-CSI triggering signalling, the A-CSI triggering signalling is employed by the evolved Node B to trigger reporting of A-CSI on at least one of a downlink Frequency Division Duplexing (FDD) spectrum or an uplink FDD spectrum.

In the above solution, the evolved Node B may further include a grouping module, and when the A-CSI triggering signalling is 1-bit, the grouping module may be configured to divide downlink sub-frames for sending the downlink control information into multiple sub-frame groups.

In the above solution, the grouping module may further be configured to determine grouping of the downlink sub-frames of the downlink FDD spectrum or downlink sub-frames of the uplink FDD spectrum, which are used for sending the downlink control information, in a preset manner.

In the above solution, the grouping module may further be configured to notify UE of grouping of the downlink sub-frames of the downlink FDD spectrum or downlink sub-frames of the uplink FDD spectrum, which are used for sending the downlink control information, through high-layer signalling.

The embodiment of the disclosure provides a UE, which may include: a receiving module, configured to receive downlink control information containing A-CSI triggering signalling, the A-CSI triggering signalling is employed by an evolved Node B to trigger reporting of A-CSI on at least one of a downlink Frequency Division Duplexing (FDD) spectrum or an uplink FDD spectrum.

In the above solution, the receiving module may further be configured to receive grouping, notified by the evolved Node B through high-layer signalling, of downlink sub-frames of the downlink FDD spectrum or downlink sub-frames of the uplink FDD spectrum, which are used for sending the downlink control information.

In the above solution, the UE may further include: a determination module, configured to determine grouping of the downlink sub-frames of the downlink FDD spectrum or downlink sub-frames of the uplink FDD spectrum, which are used for sending the downlink control information, in a preset manner negotiated with the evolved Node B.

According to the method for controlling sending of the channel state information, evolved Node B, UE and storage medium provided by the embodiment of the disclosure, the evolved Node B sends the downlink control information containing the A-CSI triggering signalling, and the A-CSI triggering signalling is employed by the evolved Node B to trigger reporting of the A-CSI on the downlink FDD spectrum and/or the uplink FDD spectrum. The UE according to the embodiment of the disclosure may feed back the corresponding channel state information according to the downlink control information sent by the evolved Node B, and after the evolved Node B receives the corresponding channel state information and perform proper scheduling, quality of downlink data transmitted on the uplink FDD spectrum is ensured, and spectrum resources are fully utilized.

### BRIEF DESCRIPTION OF THE DRAWINGS

In the drawings (which may not necessarily be drawn to scale), similar reference signs may describe similar parts in different views. Similar reference signs with different letter suffixes may represent different examples of similar parts. The drawings substantially describe each embodiment discussed in the disclosure not limitedly but exemplarily.
Fig. 1 is an implementation flowchart of a method for controlling sending of channel state information according to an embodiment of the disclosure;
Fig. 2 is another schematic diagram of flexible configuration of an uplink FDD spectrum according to an embodiment of the disclosure, corresponding to a flexible duplex manner 2 in embodiment 1;
Fig. 3 is a schematic diagram of an uplink scheduling timing relationship of uplink sub-frames of an uplink FDD spectrum according to an embodiment of the disclosure;
Fig. 4 is another schematic diagram of an uplink scheduling timing relationship of uplink sub-frames of an uplink FDD spectrum according to an embodiment of the disclosure;
Fig. 5 is another schematic diagram of an uplink scheduling timing relationship of uplink sub-frames of an uplink FDD spectrum according to an embodiment of the disclosure;
Fig. 6 is another schematic diagram of an uplink scheduling timing relationship of uplink sub-frames of an uplink FDD spectrum according to an embodiment of the disclosure;
Fig. 7 is another schematic diagram of an uplink scheduling timing relationship of uplink sub-frames of an uplink FDD spectrum according to an embodiment of the disclosure;
Fig. 8 is a schematic diagram of indication about downlink grouping through high-layer signalling according to an embodiment of the disclosure;
Fig. 9 is another schematic diagram of indication about downlink grouping through high-layer signalling according to an embodiment of the disclosure;
Fig. 10 is a schematic diagram of a grouping manner 1 according to an embodiment of the disclosure;
Fig. 11 is another schematic diagram of a grouping manner 1 according to an embodiment of the disclosure;
Fig. 12 is another schematic diagram of a grouping manner 1 according to an embodiment of the disclosure;
Fig. 13 is a schematic diagram of a grouping manner 2 according to an embodiment of the disclosure;
Fig. 14 is another schematic diagram of a grouping manner 2 according to an embodiment of the disclosure;
Fig. 15 is another schematic diagram of a grouping manner 2 according to an embodiment of the disclosure;
Fig. 16 is a schematic diagram of a grouping manner 3 according to an embodiment of the disclosure;
Fig. 17 is another schematic diagram of a grouping manner 3 according to an embodiment of the disclosure;
Fig. 18 is another schematic diagram of a grouping manner 3 according to an embodiment of the disclosure;
Fig. 19 is another schematic diagram of a grouping manner 3 according to an embodiment of the disclosure;
Fig. 20 is a schematic diagram of a grouping manner 4 according to an embodiment of the disclosure;
Fig. 21 is another schematic diagram of a grouping manner 4 according to an embodiment of the disclosure;
Fig. 22 is another schematic diagram of a grouping manner 4 according to an embodiment of the disclosure;
Fig. 23 is another schematic diagram of a grouping manner 4 according to an embodiment of the disclosure;
Fig. 24 is a schematic diagram of sending downlink control information on an uplink FDD spectrum and/or a downlink FDD spectrum according to an embodiment of the disclosure;
Fig. 25 is another schematic diagram of sending downlink control information on an uplink FDD spectrum and/or a downlink FDD spectrum according to an embodiment of the disclosure;
Fig. 26 is another schematic diagram of sending downlink control information on an uplink FDD spectrum and/or a downlink FDD spectrum according to an embodiment of the disclosure;
Fig. 27 is another schematic diagram of sending downlink control information on an uplink FDD spectrum and/or a downlink FDD spectrum according to an embodiment of the disclosure;
Fig. 28 is another schematic diagram of sending downlink control information on an uplink FDD spectrum and/or a downlink FDD spectrum according to an embodiment of the disclosure;
Fig. 29 is another schematic diagram of sending downlink control information on an uplink FDD spectrum and/or a downlink FDD spectrum according to an embodiment of the disclosure;
Fig. 30 is another schematic diagram of sending downlink control information on an uplink FDD spectrum and/or a downlink FDD spectrum according to an embodiment of the disclosure;
Fig. 31 is another schematic diagram of sending downlink control information on an uplink FDD spectrum and/or a downlink FDD spectrum according to an embodiment of the disclosure;
Fig. 32 is another schematic diagram of sending downlink control information on an uplink FDD spectrum and/or a downlink FDD spectrum according to an embodiment of the disclosure;
Fig. 33 is a block diagram of an evolved Node B according to an embodiment of the disclosure;
Fig. 34 is a block diagram of an evolved Node B according to another embodiment of the disclosure;
Fig. 35 is a block diagram of UE according to an embodiment of the disclosure; and
Fig. 36 is a block diagram of UE according to another embodiment of the disclosure.

### DETAILED DESCRIPTION

In the embodiment of the disclosure, an evolved Node B sends downlink control information containing A-CSI triggering signalling; and the A-CSI triggering signalling is employed by the evolved Node B to trigger reporting of A-CSI on a downlink FDD spectrum and/or an uplink FDD spectrum.

The subject matter will be described below with reference to specific embodiments.

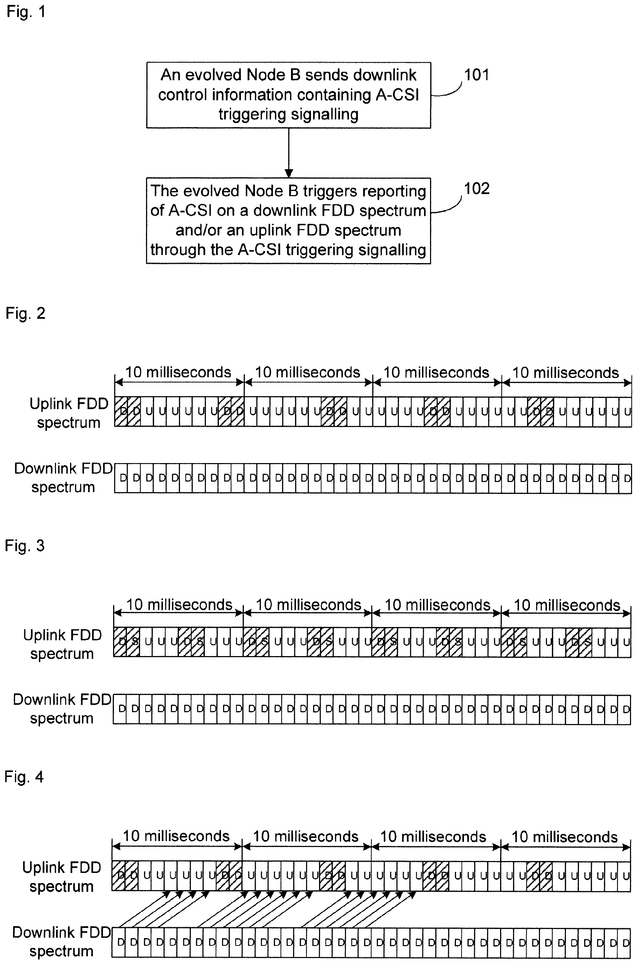

Fig. 1 is an implementation flowchart of a method for controlling sending of channel state information according to an embodiment of the disclosure, and as shown in Fig. 1, the method includes:
Step 101: an evolved Node B sends downlink control information containing A-CSI triggering signalling; and
Step 102: the evolved Node B triggers reporting of A-CSI on a downlink FDD spectrum and/or an uplink FDD spectrum through the A-CSI triggering signalling.

In an embodiment of the disclosure, the method may further include that:
when the A-CSI triggering signalling is 1-bit, the evolved Node B divides downlink sub-frames for sending the downlink control information into a plurality of sub-frame groups, and when the A-CSI triggering signalling sent in different sub-frame groups is enabled, the evolved Node B triggers reporting of corresponding different A-CSI through the A-CSI triggering signalling.

The step that the evolved Node B sends the downlink control information containing the A-CSI triggering signalling may include that:
the evolved Node B sends the downlink control information by using downlink sub-frames of the uplink FDD spectrum and/or downlink sub-frames of the downlink FDD spectrum.

In an embodiment of the disclosure, the method further includes that: the evolved Node B determines grouping of the downlink sub-frames of the downlink FDD spectrum or downlink sub-frames of the uplink FDD spectrum, which are used for sending the downlink control information, in a preset manner.

In an embodiment of the disclosure, the method further includes that: the evolved Node B notifies UE of grouping of the downlink sub-frames of the downlink FDD spectrum or downlink sub-frames of the uplink FDD spectrum, which are configured to send the downlink control information, through high-layer signalling.

The method for the evolved Node B to determine grouping of the downlink sub-frames includes that:
when the downlink sub-frames of the downlink FDD spectrum or the downlink sub-frames of the uplink FDD spectrum are to be divided into two groups, the evolved Node B sets the sub-frames of which downlink sub-frame indexes are even numbers into a sub-frame group 0, and sets the sub-frames of which downlink sub-frame indexes are odd numbers into a sub-frame group 1; or,
when the downlink sub-frames of the downlink FDD spectrum or the downlink sub-frames of the uplink FDD spectrum are to be divided into three groups, the evolved Node B sets the sub-frames of which the downlink sub-frame indexes are subjected to modulo-3 operation to obtain remainders 0 into a sub-frame group 0, sets the sub-frames of which the downlink sub-frame indexes are subjected to modulo-3 operation to obtain remainders 1 into a sub-frame group 1, and sets the sub-frames of which the downlink sub-frame indexes are subjected to modulo-3 operation to obtain remainders 2 into a sub-frame group 2; or,
when the downlink sub-frames of the downlink FDD spectrum are to be divided into two groups, the evolved Node B sets the downlink sub-frames of the downlink FDD spectrum with the same sub-frame indexes with the downlink sub-frames of the uplink FDD spectrum into a sub-frame group 0, and sets the downlink sub-frames of the downlink FDD spectrum with the same sub-frame indexes with uplink sub-frames of the uplink FDD spectrum into a sub-frame group 1; or,
when the downlink sub-frames of the downlink FDD spectrum are to be divided into three groups, the evolved Node B sets the downlink sub-frames of the downlink FDD spectrum with the same sub-frame indexes with the downlink sub-frames of the uplink FDD spectrum into a sub-frame group 0, and for other ungrouped downlink sub-frames of the downlink FDD spectrum, sets the downlink sub-frames of which the downlink sub-frame indexes are even numbers into a sub-frame group 1, and sets the sub-frames of which the downlink sub-frame indexes are odd numbers into a sub-frame group 2.

In an embodiment of the disclosure, the method further includes that: when a number of the downlink sub-frames of the downlink FDD spectrum or downlink sub-frames of the uplink FDD spectrum, which are configured to send the downlink control information containing the A-CSI triggering signalling, is 1 and the A-CSI triggering signalling is enabled, the evolved Node B triggers reporting of the A-CSI on the downlink FDD spectrum and the uplink FDD spectrum through the A-CSI triggering signalling.

The method for the evolved Node B to trigger reporting of different A-CSI through the A-CSI triggering signalling when the A-CSI triggering signalling sent in different sub-frame groups is enabled includes:
a manner 1: downlink channel state information corresponding to the downlink sub-frames in which the A-CSI triggering signalling is located is fed back; or,
a manner 2: downlink channel state information of downlink sub-frames of the uplink spectrum/downlink spectrum corresponding to the downlink sub-frames of the downlink spectrum/uplink spectrum in which the A-CSI triggering signalling is located is fed back; or,
a manner 3: the downlink channel state information of both the downlink spectrum and uplink spectrum corresponding to the downlink sub-frames in which the A-CSI triggering signalling is located is fed back.

When the downlink sub-frames are divided into two sub-frame groups, the reporting method for different A-CSI may be performed in the manner 1 when the A-CSI triggering signalling sent in the sub-frame group 0 is enabled, and the reporting method for different A-CSI may be performed in the manner 2 when the A-CSI triggering signalling sent in the sub-frame group 1 is enabled; or,
the reporting method for different A-CSI may be performed in the manner 3 when the A-CSI triggering signalling sent in the sub-frame group 0 is enabled, and the reporting method for different A-CSI may be performed in the manner 1 when the A-CSI triggering signalling sent in the sub-frame group 1 is enabled.

When the downlink sub-frames are divided into three sub-frame groups, the reporting method for different A-CSI may be performed in the manner 3 when the A-CSI triggering signalling sent in the sub-frame group 0 is enabled, the reporting method for different A-CSI may be performed in the manner 1 when the A-CSI triggering signalling sent in the sub-frame group 1 is enabled, and the reporting method for different A-CSI may be performed in the manner 2 when the A-CSI triggering signalling sent in the sub-frame group 3 is enabled.

The step that the downlink sub-frames of the downlink FDD spectrum or the downlink sub-frames of the uplink FDD spectrum are grouped may include that:
when the number of the downlink sub-frames of the downlink FDD spectrum or downlink sub-frames of the uplink FDD spectrum, which are configured to send the downlink control information containing the A-CSI triggering signalling, is 2, the sub-frames are divided into two sub-frame groups; and
when the number of the downlink sub-frames of the downlink FDD spectrum or downlink sub-frames of the uplink FDD spectrum, which are configured to send the downlink control information containing the A-CSI triggering signalling, exceeds 2, the sub-frames are divided into two or three sub-frame groups.

In an embodiment of the disclosure, when the A-CSI triggering signalling is 2-bit, the A-CSI triggering signalling has four different values, and four corresponding manners for triggering reporting of the A-CSI at least includes that:
reporting of the A-CSI is not triggered,
reporting of the A-CSI on the downlink FDD spectrum is triggered,
reporting of the A-CSI on the uplink FDD spectrum is triggered, and
reporting of the A-CSI on both the downlink FDD spectrum and the uplink FDD spectrum is triggered; or,
reporting of the A-CSI is not triggered,
reporting of the A-CSI on the downlink FDD spectrum is triggered, and
reporting of the A-CSI on the uplink FDD spectrum is triggered;
   or,
reporting of the A-CSI is not triggered,
reporting of the A-CSI on a high-layer configured sub-frame group 1 is triggered,
reporting of the A-CSI on a high-layer configured sub-frame group 2 is triggered, and
reporting of the A-CSI on a high-layer configured sub-frame group 3 is triggered.

Downlink sub-frames in the high-layer configured sub-frame groups may include: the downlink sub-frames of the uplink FDD spectrum and/or the downlink sub-frames of the downlink FDD spectrum.

In an embodiment of the disclosure, when the downlink control information containing the A-CSI triggering signalling may be sent on the uplink FDD spectrum and may also be sent on the downlink FDD spectrum, the step that the evolved Node B triggers reporting of different A-CSI through the A-CSI triggering signalling may include that:
the evolved Node B triggers reporting of the A-CSI on the uplink FDD spectrum through the A-CSI triggering signalling when the A-CSI triggering signalling sent in the downlink sub-frames of the uplink FDD spectrum is enabled, and the evolved Node B triggers reporting of the A-CSI on the downlink FDD spectrum through the A-CSI triggering signalling when the A-CSI triggering signalling sent in the downlink sub-frames of the downlink FDD spectrum is enabled; or,
the evolved Node B triggers reporting of the A-CSI on the uplink FDD spectrum and the downlink FDD spectrum through the A-CSI triggering signalling when the A-CSI triggering signalling sent in the downlink sub-frames of the uplink FDD spectrum is enabled, and the evolved Node B triggers reporting of the A-CSI on the downlink FDD spectrum through the A-CSI triggering signalling when the A-CSI triggering signalling sent in the downlink sub-frames of the downlink FDD spectrum is enabled; or,
the evolved Node B triggers reporting of the A-CSI on the uplink FDD spectrum and the downlink FDD spectrum through the A-CSI triggering signalling when the A-CSI triggering signalling sent in the downlink sub-frames of the downlink FDD spectrum is enabled, and the evolved Node B triggers reporting of the A-CSI on the uplink FDD spectrum through the A-CSI triggering signalling when the A-CSI triggering signalling sent in the downlink sub-frames of the uplink FDD spectrum is enabled; or,
the evolved Node B triggers reporting of the A-CSI on the uplink FDD spectrum through the A-CSI triggering signalling when the A-CSI triggering signalling sent in the downlink sub-frames of the uplink FDD spectrum is enabled, the evolved Node B triggers reporting of the A-CSI on the downlink FDD spectrum and the uplink FDD spectrum through the A-CSI triggering signalling when the A-CSI triggering signalling sent in the downlink sub-frames of the downlink FDD spectrum with the same sub-frame indexes with the downlink sub-frames of the uplink FDD spectrum is enabled, and the evolved Node B triggers reporting of the A-CSI on the downlink FDD spectrum through the A-CSI triggering signalling when the A-CSI triggering signalling sent in the downlink sub-frames of the downlink FDD spectrum with the same sub-frame indexes with the uplink sub-frames of the uplink FDD spectrum is enabled.

An embodiment of the disclosure provides a storage medium, which includes a set of instructions, which, when being executed, cause at least one processor to execute the abovementioned operations executed by the evolved Node B.

The embodiment of the disclosure also provides a method for controlling sending of channel state information, which includes that:
UE receives downlink control information containing A-CSI triggering signalling, the A-CSI triggering signalling being employed by an evolved Node B to trigger reporting of A-CSI on a downlink FDD spectrum and/or an uplink FDD spectrum.

In an embodiment of the disclosure, the method may further include that:
the UE receives grouping, notified by the evolved Node B through high-layer signalling, of downlink sub-frames of the downlink FDD spectrum or downlink sub-frames of the uplink FDD spectrum, which are used for sending the downlink control information.

In an embodiment of the disclosure, the method further includes that:
the UE determines grouping of the downlink sub-frames of the downlink FDD spectrum or downlink sub-frames of the uplink FDD spectrum, which are used for sending the downlink control information, according to a preset manner negotiated with the evolved Node B.

An embodiment of the disclosure provides a storage medium, which includes a set of instructions, which, when being executed, cause at least one processor to execute the abovementioned operations executed by the UE.

By adopting the method for controlling sending of the channel state information according to the embodiment of the disclosure, it can ensure that the channel state information on the uplink FDD spectrum and the downlink FDD spectrum can be timely sent. Moreover, multiple implementation solutions are provided in the embodiments of the disclosure, it is possible to merely send a channel state of the uplink FDD spectrum , or merely send channel state information of the downlink FDD spectrum, or send the channel state information of both the downlink FDD spectrum and the uplink FDD spectrum, so that maximum flexibility is provided for the evolved Node B, and the evolved Node B may implement different scheduling according to a practical condition.

The subject matter will be further described below with reference to the drawings and specific embodiments in detail.

Reporting of channel state information is classified into periodic reporting and aperiodic reporting, called Periodic Channel State Information (P-CSI) reporting and A-CSI reporting respectively. For P-CSI reporting, the UE periodically sends the channel state information in a high-layer configured sub-frame according to a configuration of an evolved Node B; and for A-CSI, the UE sends the channel state information in a corresponding sub-frame after A-CSI triggering signalling of downlink control information is enabled for triggering. The embodiment of the disclosure is directed to A-CSI reporting. In order to facilitate description, aperiodic channel state information is called A-CSI hereinafter.

### Embodiment 1

A flexible duplex operation mode is mainly described in the embodiment. Downlink transmission is introduced into an uplink FDD spectrum, and the following two manners may be considered.

A flexible duplex manner 1: as shown in Fig. 2, sub-frames corresponding to one or more uplink processes of the uplink FDD spectrum are used for downlink transmission.

A flexible duplex manner 2: as shown in Fig. 3, the uplink FDD spectrum is configured into a TDD carrier, and an uplink and downlink TDD configuration manner specified by an existing protocol is adopted, specifically as shown in Table 2.

**Table 2: Uplink and Downlink TDD Configuration Diagram**

| Uplink-downlink configuration | Downlink-uplink conversion point period | Sub-frame index #n | | | | | | | | | |
|---|---|---|---|---|---|---|---|---|---|---|---|
| | | 0 | 1 | 2 | 3 | 4 | 5 | 6 | 7 | 8 | 9 |
| 0 | 5 milliseconds | D | S | U | U | U | D | S | U | U | U |
| 1 | 5 milliseconds | D | S | U | U | D | D | S | U | U | D |
| 2 | 5 milliseconds | D | S | U | D | D | D | S | U | D | D |
| 3 | 10 milliseconds | D | S | U | U | U | D | D | D | D | D |
| 4 | 10 milliseconds | D | S | U | U | D | D | D | D | D | D |
| 5 | 10 milliseconds | D | S | U | D | D | D | D | D | D | D |
| 6 | 5 milliseconds | D | S | U | U | U | D | S | U | U | D |

### Embodiment 2

An uplink scheduling timing relationship of an uplink FDD spectrum is mainly described in the embodiment. Since sending of A-CSI is triggered through A-CSI triggering signalling in downlink control information (configured for uplink scheduling), and is implemented on Physical Uplink Shared Channels (PUSCHs) of uplink sub-frames scheduled by the downlink control information. Here, there is a timing relationship between the downlink control information and the scheduled uplink sub-frames, subsequently called the uplink scheduling timing relationship for short. After downlink transmission is introduced into the uplink FDD spectrum, an uplink scheduling timing relationship of uplink sub-frames of the uplink FDD spectrum is to be reconsidered.

The following solutions may be provided for reference.

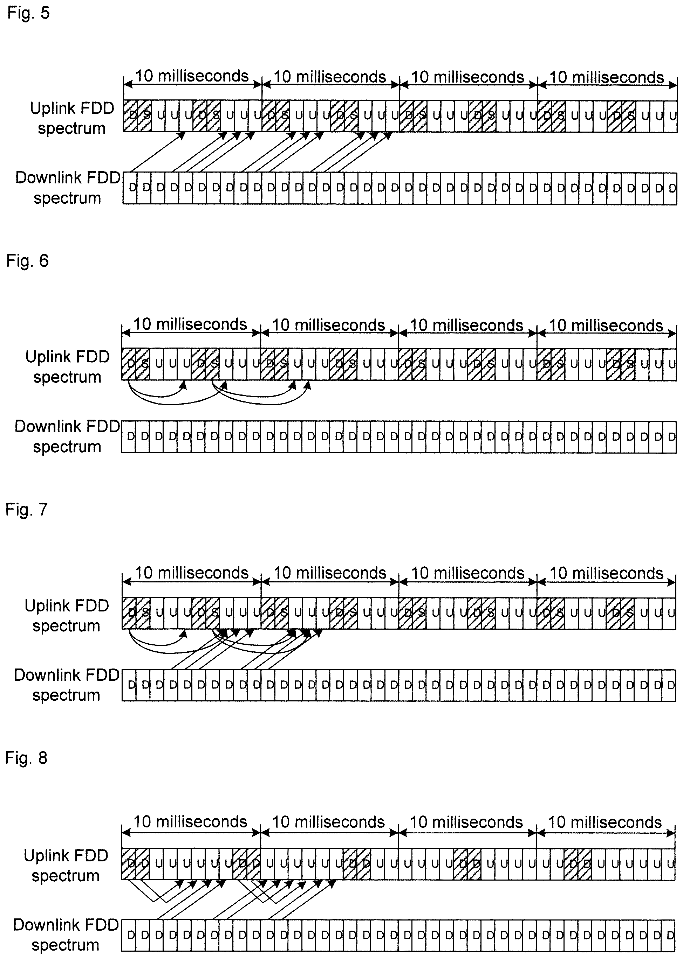

An uplink scheduling timing solution 1: scheduling of the uplink sub-frames of the uplink FDD spectrum is determined according to an uplink scheduling timing relationship defined by an existing FDD system, as shown in Fig. 4 and Fig. 5, that is, PUSCH transmission in a sub-frame n+4 is scheduled by downlink control information sent in a sub-frame n.

The solution is applicable to a scenario where downlink control information for scheduling the PUSCH is sent on a downlink FDD spectrum, and is also applicable to a scenario where one of the flexible duplex manners as described in embodiment 1 is adopted and the downlink control information for scheduling the PUSCH is sent on a downlink FDD spectrum.

An uplink scheduling timing solution 2: scheduling of the uplink sub-frames of the uplink FDD spectrum is determined according to an uplink scheduling timing relationship defined by an existing TDD system, as shown in Fig. 6, that is, the PUSCH transmission in a sub-frame n+k is scheduled by the downlink control information sent in the sub-frame n, where values of k are shown in Table 3.

**Table 3: Values of k for Different Uplink and Downlink TDD Configurations**

| Uplink and downlink TDD configuration | Sub-frame index n | | | | | | | | | |
|---|---|---|---|---|---|---|---|---|---|---|
| | 0 | 1 | 2 | 3 | 4 | 5 | 6 | 7 | 8 | 9 |
| 0 | 4/7 | 6/7 | | | | 4/7 | 6/7 | | | |
| 1 | | 6 | | | 4 | | 6 | | | 4 |
| 2 | | | | 4 | | | | | 4 | |
| 3 | 4 | | | | | | | | 4 | 4 |
| 4 | | | | | | | | | 4 | 4 |
| 5 | | | | | | | | | 4 | |
| 6 | 7 | 7 | | | | 7 | 7 | | | 5 |

An uplink scheduling timing relationship 3: it is a combination of the solution 1 and the solution 2, that is, when the downlink control information for scheduling the PUSCH is sent on the uplink FDD spectrum and the flexible duplex manner 2 described in embodiment 1 is adopted, scheduling of the uplink sub-frames of the uplink FDD spectrum is determined according to the uplink scheduling timing relationship defined by the existing TDD system; in other cases, scheduling of the uplink sub-frames of the uplink FDD spectrum is determined according to the uplink scheduling timing relationship defined by the existing FDD system, specifically as shown in Fig. 7 and Fig. 8.

### Embodiment 3

Sub-frame grouping is mainly described in the embodiment. When A-CSI triggering signalling in downlink control information contains just 1-bit, in order to flexibly trigger A-CSI feedback of an uplink FDD spectrum and a downlink FDD spectrum, an evolved Node B divides sub-frames for sending the downlink control information containing the A-CSI triggering signalling into a plurality of sub-frame groups, and when the A-CSI triggering signalling sent in different sub-frame groups is enabled, reporting of different A-CSI is triggered.

### Specific embodiment 3-1

When grouping of the downlink sub-frames is configured by high-layer signalling, the evolved Node B notifies the UE of grouping information of the corresponding downlink sub-frames; the evolved Node B may divide the downlink sub-frames into one or more sub-frame groups; and
the downlink sub-frames are downlink sub-frames of the uplink FDD spectrum, and/or downlink sub-frames of the downlink FDD spectrum.

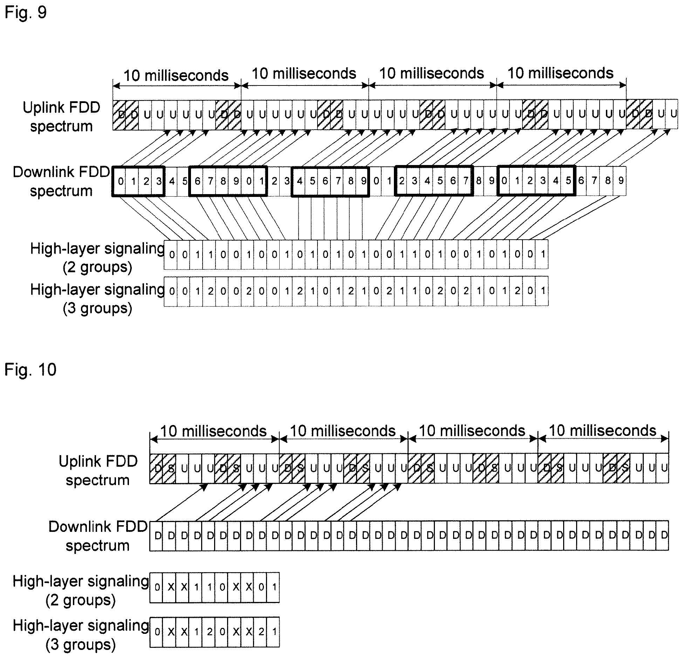

In order to ensure maximum flexibility in triggering of A-CSI, the evolved Node B may establish a bitmap corresponding to downlink sub-frames for sending downlink control information, in the downlink FDD spectrum, for scheduling the PUSCH, and values on the bitmap indicate sub-frame groups to which the corresponding sub-frames belong. As shown in Fig. 9, when the downlink sub-frames are divided into two groups, values of the bitmap are {0,1}, while when the downlink sub-frames are divided into three groups, the values of the bitmap are {0,1,2}, and 0, 1 and 2 represent sub-frame groups 0, 1 and 2 respectively.

The abovementioned manner is most flexible, but correspondingly, requires most high-layer signalling.

If certain flexibility may be sacrificed, the corresponding bitmap may be limited to downlink sub-frames corresponding to a single radio frame, and such a manner is relatively more applicable to the abovementioned flexible duplex manner 2, as shown in Fig. 10.

A corresponding relationship between the sub-frame groups and the triggered A-CSI of the uplink FDD spectrum and/or the downlink FDD spectrum may be agreed by the evolved Node B and the UE. For example:
in the case that there are two sub-frame groups, reporting of the A-CSI on the downlink FDD spectrum is triggered when the A-CSI triggering signalling sent in the sub-frame group 0 is enabled, and reporting of the A-CSI on the uplink FDD spectrum is triggered when the A-CSI triggering signalling sent in the sub-frame group 1 is enabled;
   or,
in the case that there are two sub-frame groups, reporting of the A-CSI on both the uplink FDD spectrum and the downlink FDD spectrum is triggered, when the A-CSI triggering signalling sent in the sub-frame group 0 is enabled, and reporting of the A-CSI on the downlink FDD spectrum or the uplink FDD spectrum is triggered when the A-CSI triggering signalling sent in the sub-frame group 1 is enabled;
   or,
in the case that there are three sub-frame groups, reporting of the A-CSI on both the downlink FDD spectrum and the uplink FDD spectrum is triggered when the A-CSI triggering signalling sent in the sub-frame group 0 is enabled, reporting of the A-CSI on the downlink FDD spectrum is triggered when the A-CSI triggering signalling sent in the sub-frame group 1 is enabled, and reporting of the A-CSI on the uplink FDD spectrum is triggered when the A-CSI triggering signalling sent in the sub-frame group 2 is enabled.

### Specific embodiment 3-2

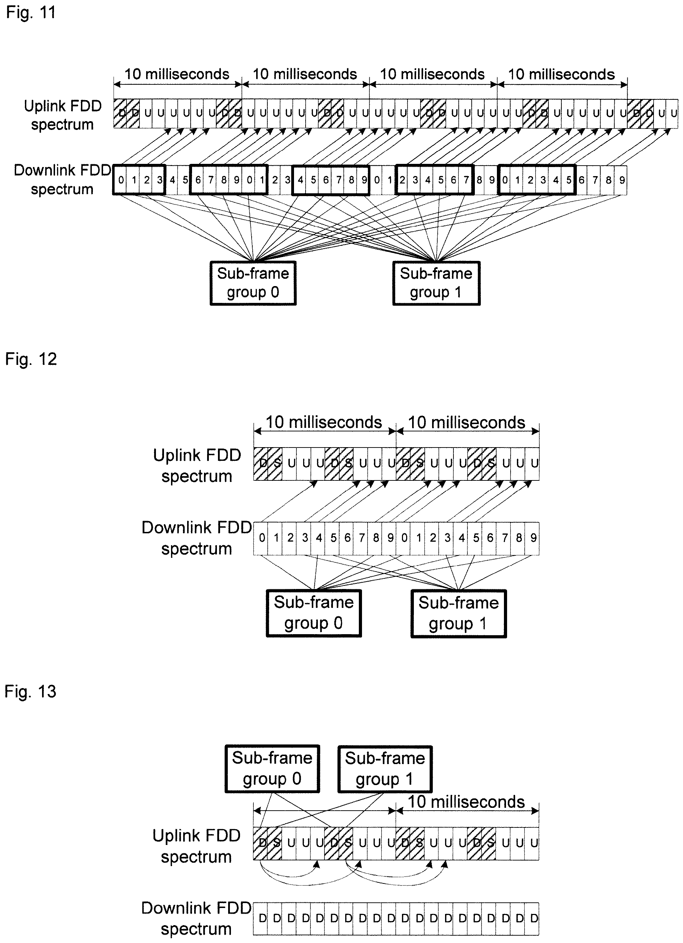

When the downlink sub-frames are grouped in a predefined manner, for example, in a grouping manner 1 in the embodiment, the sub-frames of which downlink sub-frame indexes are even numbers form a sub-frame group 0, and the sub-frames of which downlink sub-frame indexes are odd numbers form a sub-frame group 1, the sub-frame group 0 and sub-frame group 1 shown in Fig. 11, Fig. 12 and Fig. 13 are obtained.

A corresponding relationship between the sub-frame group 0/1 and the triggered A-CSI of the uplink FDD spectrum and/or the downlink FDD spectrum may adopt the agreement in the embodiment 3-1, and will not be elaborated herein.

### Specific embodiment 3-3

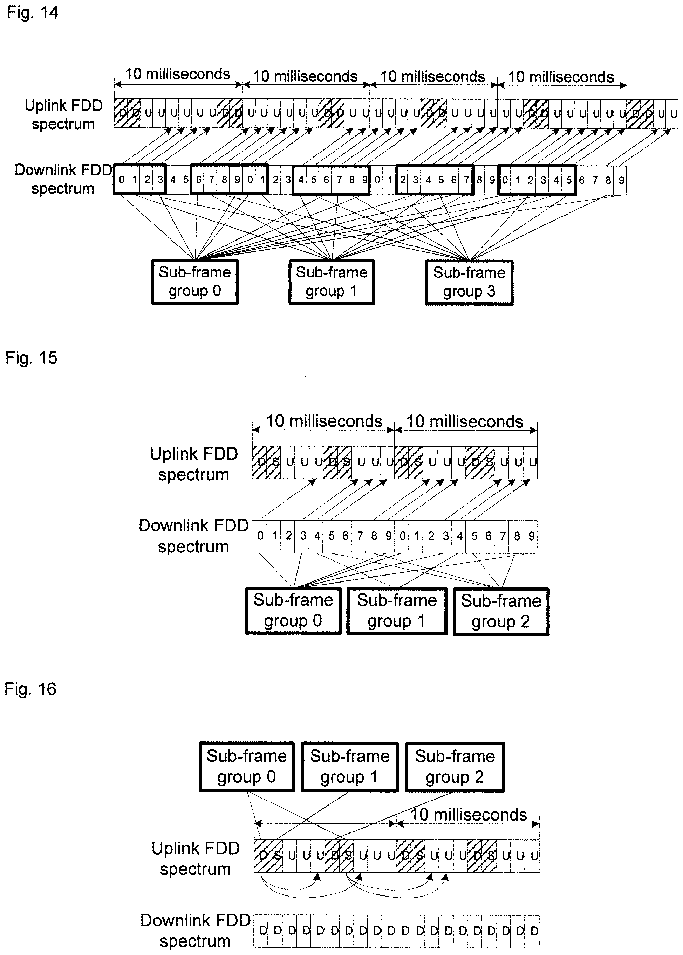

When the downlink sub-frames are grouped in a predefined manner, for example, in a grouping manner 2 in the embodiment, the sub-frames of which the downlink sub-frame indexes are subjected to modulo-3 operation to obtain remainders 0 form a sub-frame group 0, the sub-frames of which the downlink sub-frame indexes are subjected to modulo-3 operation to obtain remainders 1 form a sub-frame group 1, and the sub-frames of which the downlink sub-frame indexes are subjected to modulo-3 operation to obtain remainders 2 form a sub-frame group 2, the sub-frame group 0, sub-frame group 1 and sub-frame group 2 shown in Fig. 14, Fig. 15 and Fig. 16 are obtained.

A corresponding relationship between the sub-frame group 0/1/2 and the triggered A-CSI of the uplink FDD spectrum and/or the downlink FDD spectrum may adopt the agreement in the specific embodiment 3-1, and will not be elaborated herein.

### Specific embodiment 3-4

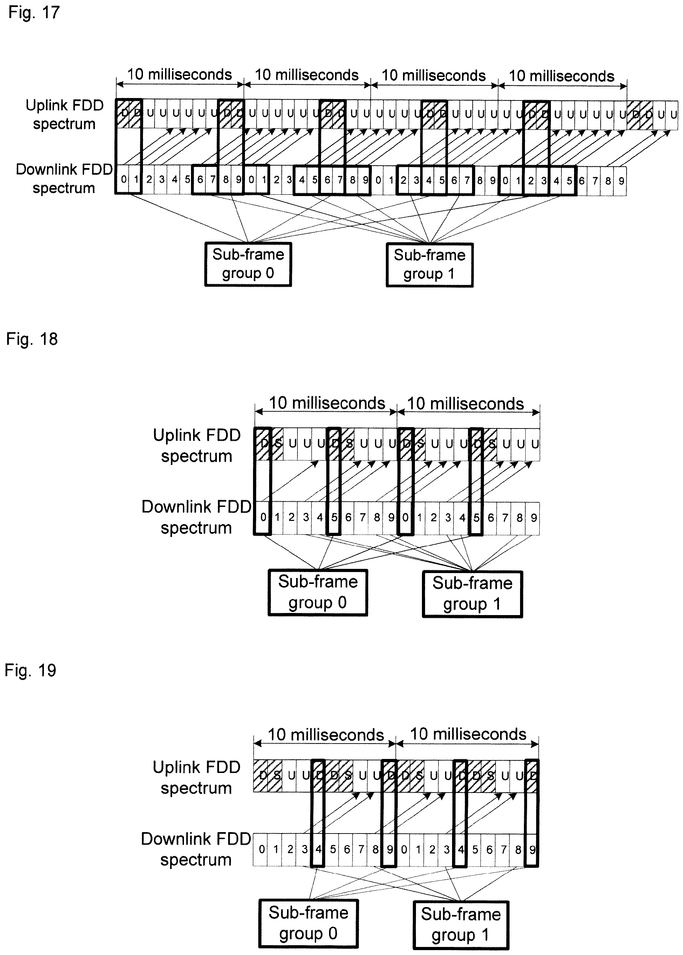

When the downlink sub-frames are grouped in a predefined manner, for example, in a grouping manner 3 in the embodiment, the downlink sub-frames of the downlink FDD spectrum corresponding to the downlink sub-frames of the uplink FDD spectrum form a sub-frame group 0, and the downlink sub-frames of the downlink FDD spectrum corresponding to uplink sub-frames of the uplink FDD spectrum form a sub-frame group 1, the sub-frame group 0 and sub-frame group 1 shown in Fig. 17, Fig. 18, Fig. 19 and Fig. 20 are obtained.

A corresponding relationship between the sub-frame group 0/1 and the triggered A-CSI of the uplink FDD spectrum and/or the downlink FDD spectrum may adopt the agreement in the specific embodiment 3-1, and will not be elaborated herein.

### Specific embodiment 3-5

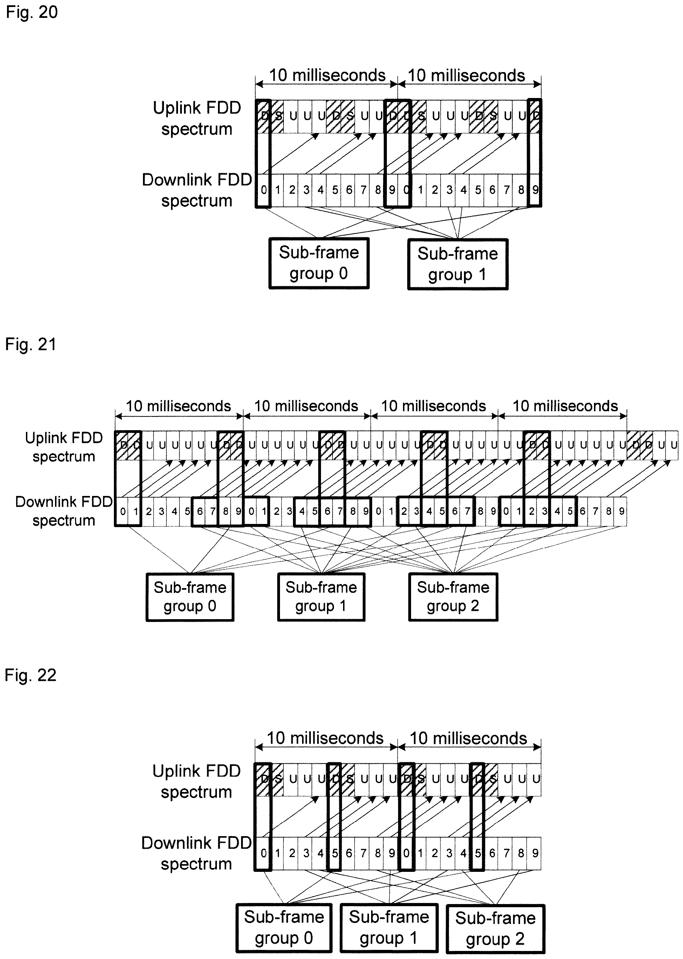

When the downlink sub-frames are grouped in a predefined manner, for example, in a grouping manner 4 in the embodiment, the downlink sub-frames of the downlink FDD spectrum corresponding to the downlink sub-frames of the uplink FDD spectrum form a sub-frame group 0, and in the other downlink sub-frames, the downlink sub-frames of which the downlink sub-frame indexes are even numbers form a sub-frame group 1 and the sub-frames of which the downlink sub-frame indexes are odd numbers form a sub-frame group 2, the sub-frame group 0, sub-frame group 1 and sub-frame group 2 shown in Fig. 21, Fig. 22, Fig. 23 and Fig. 24 are obtained.

A corresponding relationship between the sub-frame group 0/1/2 and the triggered A-CSI of the uplink FDD spectrum and/or the downlink FDD spectrum may adopt the agreement in the specific embodiment 3-1, and will not be elaborated herein.

In the embodiment, although the listed examples are the downlink sub-frames of the downlink FDD spectrum, the embodiment is also applicable to the downlink sub-frames of the uplink FDD spectrum, and is applicable to the downlink sub-frames of both the downlink FDD spectrum and the uplink FDD spectrum.

### Embodiment 4

The condition that A-CSI triggering signalling is 2-bit is mainly described in the embodiment. When the A-CSI triggering signalling in downlink control information is expanded to 2 bits, the 2 bits may be set into different values to implement triggering of A-CSI on an uplink FDD spectrum and/or a downlink FDD spectrum.

When the A-CSI triggering signalling is 2-bit, a corresponding relationship between the 2-bit signalling and triggered reporting of the A-CSI on the uplink FDD spectrum and/or the downlink FDD spectrum may adopt a corresponding relationship shown in Table 4 or Table 5.

**Table 4**

| A-CSI triggering signalling control field | Triggered A-CSI on uplink/downlink FDD spectrum |
|---|---|
| '00' | Not triggering reporting of the A-CSI |
| '01' | Triggering reporting of the A-CSI on the |
| | downlink FDD spectrum |
| '10' | Triggering reporting of the A-CSI on the uplink FDD spectrum |
| '11' | Triggering reporting of the A-CSI on the uplink FDD spectrum and the downlink FDD spectrum |

**Table 5**

| A-CSI triggering signalling control field | Triggered A-CSI on uplink/downlink FDD spectrum |
|---|---|
| '00' | Not triggering reporting of the A-CSI |
| '01' | Triggering reporting of the A-CSI on the downlink FDD spectrum |
| '10' | Triggering reporting of the A-CSI on the uplink FDD spectrum |
| '11' | Reserved |

Or, two or three A-CSI reporting sub-frame groups are configured by a high layer, and the 2 bits are configured to indicate the sub-frame group for which A-CSI reporting is triggered, as shown in Table 6.

**Table 6**

| A-CSI triggering signalling control field | Triggered high-layer configured sub-frame group |
|---|---|
| '00' | Not triggering reporting of the A-CSI |
| '01' | Triggering a first high-layer configured sub-frame group |
| '10' | Triggering a second high-layer configured sub-frame group |
| '11' | Triggering a third high-layer configured |
| | sub-frame group or reserved |

### Embodiment 5

In the embodiment, when downlink control information containing A-CSI triggering signalling may be sent on an uplink FDD spectrum and may also be sent on a downlink spectrum:
reporting of A-CSI on the uplink FDD spectrum is triggered when the A-CSI triggering signalling sent in downlink sub-frames of the uplink FDD spectrum is enabled, and reporting of the A-CSI on the downlink FDD spectrum is triggered when the A-CSI triggering signalling sent in downlink sub-frames of the downlink FDD spectrum is enabled.

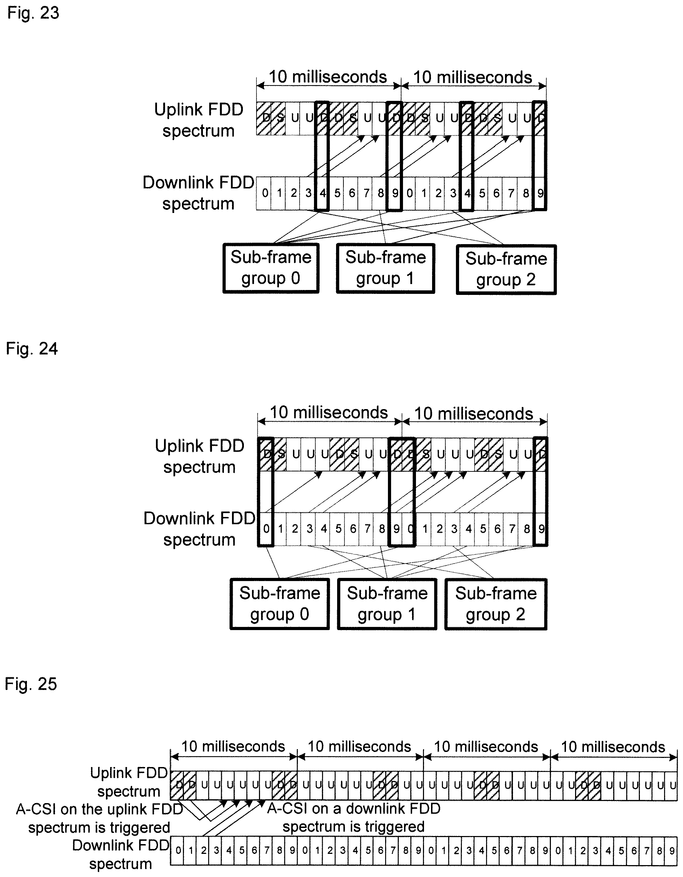

As shown in Fig. 25, reporting of the A-CSI on the uplink FDD spectrum is triggered when the A-CSI triggering signalling sent in downlink sub-frames 0 and 1 of the uplink FDD spectrum is enabled, and reporting of the A-CSI on the downlink FDD spectrum is triggered when the A-CSI triggering signalling sent in downlink sub-frames 2 and 3 of the downlink FDD spectrum is triggered.

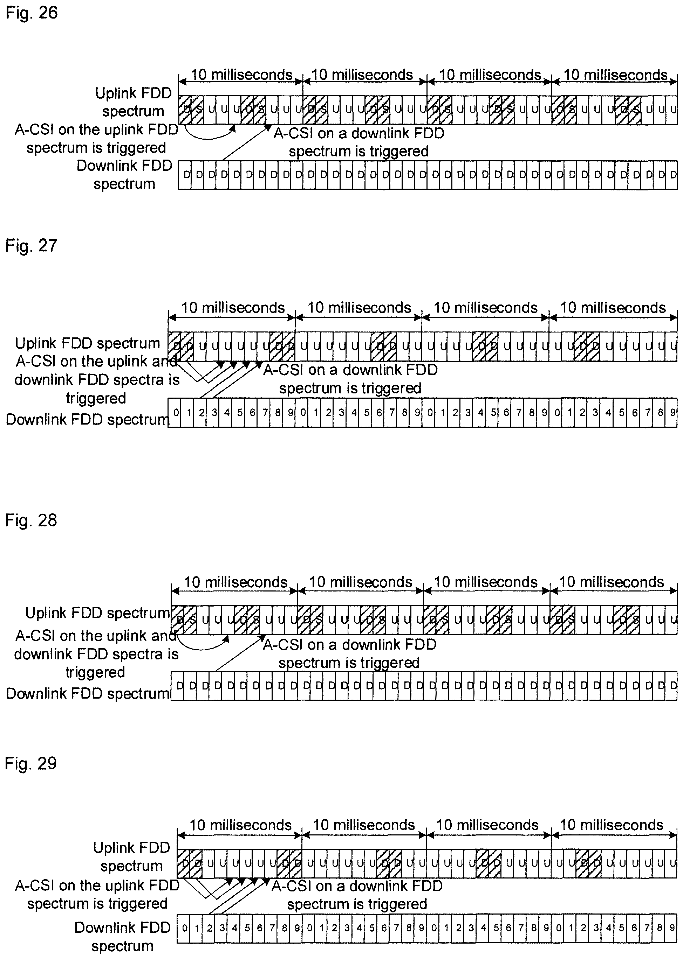

As shown in Fig. 26, reporting of the A-CSI on the uplink FDD spectrum is triggered when the A-CSI triggering signalling sent in the downlink sub-frame 0 of the uplink FDD spectrum is enabled, and reporting of the A-CSI on the downlink FDD spectrum is triggered when the A-CSI triggering signalling sent in the downlink sub-frame 3 of the downlink FDD spectrum is enabled.

In addition, for the downlink control information sent on the uplink FDD spectrum, its corresponding uplink scheduling timing relationship may adopt an uplink scheduling timing relationship of an existing FDD system, as shown in Fig. 25, and may also adopt an uplink scheduling relationship of an existing TDD system, as shown in Fig. 26. While for the downlink control information sent on the downlink FDD spectrum, its corresponding uplink scheduling timing relationship may adopt the uplink scheduling timing relationship of the existing FDD system.

Or,
reporting of the A-CSI on both the uplink FDD spectrum and the downlink FDD spectrum is triggered when the A-CSI triggering signalling sent in the downlink sub-frames of the uplink FDD spectrum is enabled, and reporting of the A-CSI on the downlink FDD spectrum is enabled when the A-CSI triggering signalling sent by the downlink sub-frames of the downlink FDD spectrum is enabled.

As shown in Fig. 27, reporting of the A-CSI on the uplink FDD spectrum and the downlink FDD spectrum is triggered when the A-CSI triggering signalling sent in the downlink sub-frames 0 and 1 of the uplink FDD spectrum is enabled, and reporting of the A-CSI on the downlink FDD spectrum is triggered when the A-CSI triggering signalling sent in the downlink sub-frames 2 and 3 of the downlink FDD spectrum is enabled.

As shown in Fig. 28, reporting of the A-CSI on the uplink FDD spectrum and the downlink FDD spectrum is triggered when the A-CSI triggering signalling sent in the downlink sub-frame 0 of the uplink FDD spectrum is enabled, and reporting of the A-CSI on the downlink FDD spectrum is triggered when the A-CSI triggering signalling sent in the downlink sub-frame 3 of the downlink FDD spectrum is enabled.

Or,
reporting of the A-CSI on both the uplink FDD spectrum and the downlink FDD spectrum is triggered when the A-CSI triggering signalling sent in the downlink sub-frames of the downlink FDD spectrum is enabled, and reporting of the A-CSI on the uplink FDD spectrum is triggered when the A-CSI triggering signalling sent in the downlink sub-frames of the uplink FDD spectrum is enabled.

As shown in Fig. 29, reporting of the A-CSI on the uplink FDD spectrum is triggered when the A-CSI triggering signalling sent in the downlink sub-frames 0 and 1 of the uplink FDD spectrum is enabled, and reporting of the A-CSI on the downlink FDD spectrum and the uplink FDD spectrum is triggered when the A-CSI triggering signalling sent in the downlink sub-frames 2 and 3 of the downlink FDD spectrum is enabled.

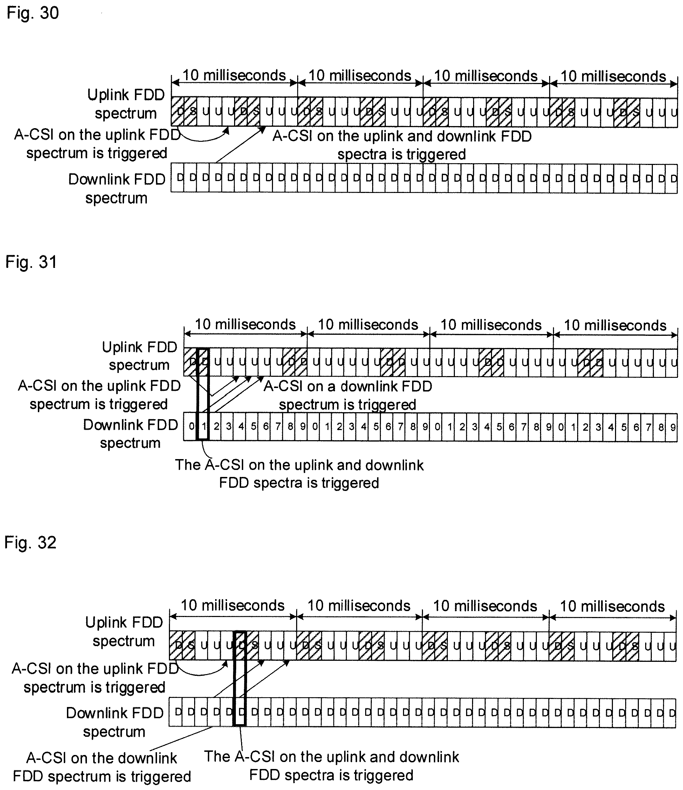

As shown in Fig. 30, reporting of the A-CSI on the uplink FDD spectrum is triggered when the A-CSI triggering signalling sent in the downlink sub-frame 0 of the uplink FDD spectrum is enabled, and reporting of the A-CSI on the downlink FDD spectrum and the uplink FDD spectrum is triggered when the A-CSI triggering signalling sent in the downlink sub-frame 3 of the downlink FDD spectrum is enabled.

Or,
reporting of the A-CSI on the uplink FDD spectrum is triggered when the A-CSI triggering signalling sent in the downlink sub-frames of the uplink FDD spectrum is enabled, reporting of the A-CSI on both the downlink FDD spectrum and the uplink FDD spectrum is triggered when the A-CSI triggering signalling sent in the downlink sub-frames of the downlink FDD spectrum with the same sub-frame indexes with the downlink sub-frames of the uplink FDD spectrum is enabled, and reporting of the A-CSI on the downlink FDD spectrum is triggered when the A-CSI triggering signalling sent in the downlink sub-frames of the downlink FDD spectrum with the same sub-frame indexes with the uplink sub-frames of the uplink FDD spectrum is enabled.

As shown in Fig. 31, reporting of the A-CSI on the uplink FDD spectrum is triggered when the A-CSI triggering signalling sent in the downlink sub-frame 0 of the uplink FDD spectrum is enabled, reporting of the A-CSI on the downlink FDD spectrum and the uplink FDD spectrum is triggered when the A-CSI triggering signalling sent in the downlink sub-frame 1 of the downlink FDD spectrum is enabled, because the sub-frame 1 is also a downlink sub-frame on the uplink FDD spectrum, and reporting of the A-CSI on the downlink FDD spectrum is triggered when the A-CSI triggering signalling sent in the downlink sub-frame 2 of the downlink FDD spectrum is enabled, because the sub-frame 2 is also an uplink sub-frame on the uplink FDD spectrum.

As shown in Fig. 32, reporting of the A-CSI on the uplink FDD spectrum is triggered when the A-CSI triggering signalling sent in the downlink sub-frame 0 of the uplink FDD spectrum is enabled, reporting of the A-CSI on the downlink FDD spectrum and the uplink FDD spectrum is triggered when the A-CSI triggering signalling sent in a downlink sub-frame 5 of the downlink FDD spectrum is enabled, because the sub-frame 5 is also a downlink sub-frame on the uplink FDD spectrum, and reporting of the A-CSI on the downlink FDD spectrum is triggered when the A-CSI triggering signalling sent in the downlink sub-frame 3 of the downlink FDD spectrum is enabled, because the sub-frame 3 is also an uplink sub-frame on the uplink FDD spectrum.

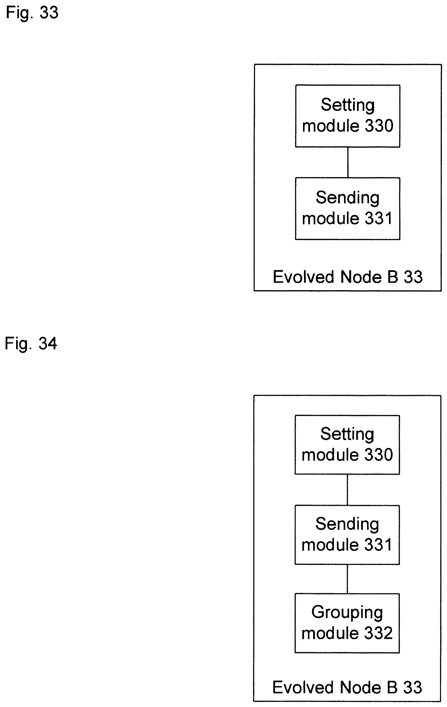

Based on the method described above, an embodiment of the disclosure provides an evolved Node B. As shown in Fig. 33, the evolved Node B 33 includes: a setting module 330 and a sending module 331.

The setting module 330 is configured to add A-CSI triggering signalling into downlink control information.

The sending module 331 is configured to send the downlink control information containing the A-CSI triggering signalling.

The A-CSI triggering signalling is employed by the evolved Node B to trigger reporting of A-CSI on a downlink FDD spectrum and/or an uplink FDD spectrum.

In a practical application, the setting module 330 and the sending module 331 may be implemented by a Central Processing Unit (CPU), Digital Signal Processor (DSP) or Field-Programmable Gate Array (FPGA) in the evolved Node B 33.

In an embodiment of the disclosure, a UE may feed back corresponding channel state information according to the downlink control information sent by the evolved Node B, and after the evolved Node B receives the corresponding channel state information and performs proper scheduling, quality of downlink data transmitted on the uplink FDD spectrum is ensured, and spectrum resources are fully utilized.

In an embodiment of the disclosure, as shown in Fig. 34, the evolved Node B 33 may further include: a grouping module 332, and when the A-CSI triggering signalling is 1-bit, the grouping module 332 is configured to divide downlink sub-frames for sending the downlink control information into a plurality of sub-frame groups.

In a practical application, the grouping module 332 may be implemented by the CPU, DSP or FPGA in the evolved Node B 33.

In an embodiment of the disclosure, the grouping module 332 may further be configured to determine grouping of the downlink sub-frames of the downlink FDD spectrum or downlink sub-frames of the uplink FDD spectrum, which are used for sending the downlink control information, in a preset manner.

In an embodiment of the disclosure, the grouping module 332 may further be configured to notify the UE of grouping of the downlink sub-frames of the downlink FDD spectrum or downlink sub-frames of the uplink FDD spectrum, which are used for sending the downlink control information, through high-layer signalling.

The method for the grouping module 332 to determine grouping of the downlink sub-frames includes that:
when the downlink sub-frames of the downlink FDD spectrum or the downlink sub-frames of the uplink FDD spectrum are to be divided into two groups, the evolved Node B sets the sub-frames of which downlink sub-frame indexes are even numbers into a sub-frame group 0, and sets the sub-frames of which downlink sub-frame indexes are odd numbers into a sub-frame group 1; or,
when the downlink sub-frames of the downlink FDD spectrum or the downlink sub-frames of the uplink FDD spectrum are to be divided into three groups, the evolved Node B sets the sub-frames of which the downlink sub-frame indexes are subjected to modulo-3 operation to obtain remainders 0 into a sub-frame group 0, sets the sub-frames of which the downlink sub-frame indexes are subjected to modulo-3 operation to obtain remainders 1 into a sub-frame group 1, and sets the sub-frames of which the downlink sub-frame indexes are subjected to modulo-3 operation to obtain remainders 2 into a sub-frame group 2; or,
when the downlink sub-frames of the downlink FDD spectrum are to be divided into two groups, the evolved Node B sets the downlink sub-frames of the downlink FDD spectrum with the same sub-frame indexes with the downlink sub-frames of the uplink FDD spectrum into a sub-frame group 0, and sets the downlink sub-frames of the downlink FDD spectrum with the same sub-frame indexes with uplink sub-frames of the uplink FDD spectrum into a sub-frame group 1; or,
when the downlink sub-frames of the downlink FDD spectrum are to be divided into three groups, the evolved Node B sets the downlink sub-frames of the downlink FDD spectrum with the same sub-frame indexes with the downlink sub-frames of the uplink FDD spectrum into a sub-frame group 0, sets the downlink sub-frames of which the downlink sub-frame indexes are even numbers in the other ungrouped downlink sub-frames of the downlink FDD spectrum into a sub-frame group 1, and sets the sub-frames of which the downlink sub-frame indexes are odd numbers into a sub-frame group 2.

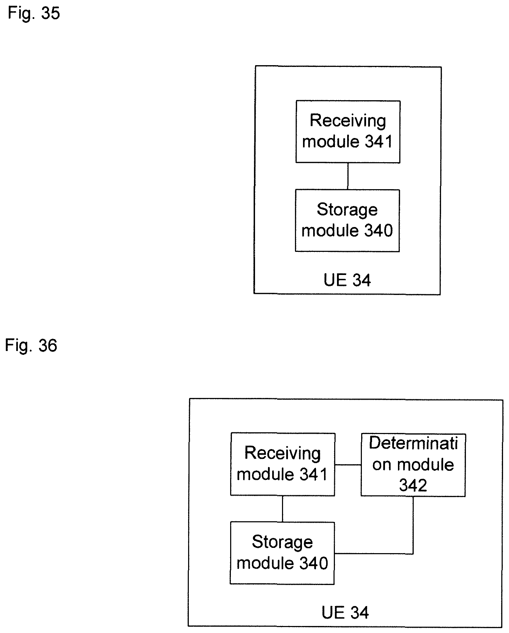

An embodiment of the disclosure provides a UE. As shown in Fig. 35, the UE 34 includes: a receiving module 341 and a storage module 340.

The receiving module 341 is configured to receive downlink control information containing A-CSI triggering signalling.

The storage module 340 is configured to store the downlink control information.

The A-CSI triggering signalling is employed by an evolved Node B to trigger reporting of A-CSI on a downlink FDD spectrum and/or an uplink FDD spectrum.

In a practical application, the receiving module 341 and the storage module 340 may be implemented by a CPU, DSP or FPGA in the UE 34.

In an embodiment of the disclosure, the receiving module 341 may further be configured to receive grouping, notified by the evolved Node B through high-layer signalling, of downlink sub-frames of the downlink FDD spectrum or downlink sub-frames of the uplink FDD spectrum, which are used for sending the downlink control information.

In an embodiment of the disclosure, as shown in Fig. 36, the UE 34 may further include: a determination module 342, configured to determine grouping of the downlink sub-frames of the downlink FDD spectrum or downlink sub-frames of the uplink FDD spectrum, which are used for sending the downlink control information, in a preset manner negotiated with the evolved Node B.

In the practical application, the determination module 340 may be implemented by the CPU, DSP or FPGA in the UE 34.

The UE according to the embodiment of the disclosure may feed back the corresponding channel state information according to the downlink control information sent by the evolved Node B, and after the evolved Node B receives the corresponding channel state information and performs proper scheduling, quality of downlink data transmitted on the uplink FDD spectrum is ensured, and spectrum resources are fully utilized.

By adopting the method for controlling sending of the channel state information according to the embodiment of the disclosure, it can ensure that the channel state information on the uplink FDD spectrum and the downlink FDD spectrum can be timely sent. Moreover, multiple implementation solutions are provided in the embodiments of the disclosure, it is possible to merely send a channel state of the uplink FDD spectrum , or merely send channel state information of the downlink FDD spectrum, or send the channel state information of both the downlink FDD spectrum and the uplink FDD spectrum, so that maximum flexibility is provided for the evolved Node B, and the evolved Node B may implement different scheduling according to a practical condition.

Those skilled in the art should know that the embodiment of the disclosure may be provided as a method, a system or a computer program product. Therefore, the disclosure may adopt a form of pure hardware embodiment, pure software embodiment and combined software and hardware embodiment. Moreover, the disclosure may adopt a form of computer program product implemented on one or more computer-available storage media (including, but not limited to, a disk memory and an optical memory) including computer-available program codes.

The disclosure is described with reference to flowcharts and/or block diagrams of the method, equipment (system) and computer program product according to the embodiment of the disclosure. It should be understood that each flow and/or block in the flowcharts and/or the block diagrams and combinations of the flows and/or blocks in the flowcharts and/or the block diagrams may be implemented by computer program instructions. These computer program instructions may be provided for a universal computer, a dedicated computer, an embedded processor or a processor of other programmable data processing equipment to generate a machine, so that a device for realizing a function specified in one flow or more flows in the flowcharts and/or one block or more blocks in the block diagrams is generated by the instructions executed through the computer or the processor of the other programmable data processing equipment.

These computer program instructions may also be stored in a computer-readable memory capable of guiding the computer or the other programmable data processing equipment to work in a specific manner, so that a product including an instruction device may be generated by the instructions stored in the computer-readable memory, the instruction device realizing the function specified in one flow or many flows in the flowcharts and/or one block or many blocks in the block diagrams.

These computer program instructions may further be loaded onto the computer or the other programmable data processing equipment, so that a series of operating steps are executed on the computer or the other programmable data processing equipment to generate processing implemented by the computer, and steps for realizing the function specified in one flow or many flows in the flowcharts and/or one block or many blocks in the block diagrams are provided by the instructions executed on the computer or the other programmable data processing equipment.

The above is only the preferred embodiment of the disclosure and not intended to limit the scope of protection of the disclosure.

## Claims

1. A method for controlling sending of channel state information, comprising:
sending, by an evolved Node B, downlink control information containing Aperiodic Channel State Information (A-CSI) triggering signalling, the A-CSI triggering signalling being employed by the evolved Node B to trigger reporting of A-CSI on at least one of a downlink Frequency Division Duplexing (FDD) spectrum or an uplink FDD spectrum.

2. The method according to claim 1, further comprising:
when the A-CSI triggering signalling is 1-bit, dividing, by the evolved Node B, downlink sub-frames for sending the downlink control information into multiple sub-frame groups, and
when the A-CSI triggering signalling sent in different sub-frame groups is enabled, triggering, by the evolved Node B, reporting of corresponding different A-CSI through the A-CSI triggering signalling.

3. The method according to claim 1, wherein sending, by the evolved Node B, the downlink control information containing the A-CSI triggering signalling comprises:
sending, by the evolved Node B, the downlink control information by using at least one of downlink sub-frames of the uplink FDD spectrum or downlink sub-frames of the downlink FDD spectrum.

4. The method according to claim 2, further comprising: determining, by the evolved Node B, grouping of the downlink sub-frames of the downlink FDD spectrum or downlink sub-frames of the uplink FDD spectrum, which are used for sending the downlink control information, in a preset manner.

5. The method according to claim 2, further comprising: notifying, by the evolved Node B through high-layer signalling, User Equipment (UE) of grouping of the downlink sub-frames of the downlink FDD spectrum or downlink sub-frames of the uplink FDD spectrum, which are used for sending the downlink control information.

6. The method according to claim 4, wherein determining, by the evolved Node B, grouping of the downlink sub-frames comprises:
when the downlink sub-frames of the downlink FDD spectrum or the downlink sub-frames of the uplink FDD spectrum are to be divided into two groups, setting, by the evolved Node B, the sub-frames of which downlink sub-frame indexes are even numbers into a sub-frame group 0, and setting the sub-frames of which downlink sub-frame indexes are odd numbers into a sub-frame group 1; or,
when the downlink sub-frames of the downlink FDD spectrum or the downlink sub-frames of the uplink FDD spectrum are to be divided into three groups, setting, by the evolved Node B, the sub-frames of which the downlink sub-frame indexes are subjected to modulo-3 operation to obtain remainders 0 into a sub-frame group 0, setting the sub-frames of which the downlink sub-frame indexes are subjected to modulo-3 operation to obtain remainders 1 into a sub-frame group 1, and setting the sub-frames of which the downlink sub-frame indexes are subjected to modulo-3 operation to obtain remainders 2 into a sub-frame group 2; or,
when the downlink sub-frames of the downlink FDD spectrum are to be divided into two groups, setting, by the evolved Node B, the downlink sub-frames of the downlink FDD spectrum with the same sub-frame indexes with the downlink sub-frames of the uplink FDD spectrum into a sub-frame group 0, and setting the downlink sub-frames of the downlink FDD spectrum with the same sub-frame indexes with uplink sub-frames of the uplink FDD spectrum into a sub-frame group 1; or,
when the downlink sub-frames of the downlink FDD spectrum are to be divided into three groups, setting, by the evolved Node B, the downlink sub-frames of the downlink FDD spectrum with the same sub-frame indexes with the downlink sub-frames of the uplink FDD spectrum into a sub-frame group 0; and for other ungrouped downlink sub-frames of the downlink FDD spectrum, setting the downlink sub-frames of which the downlink sub-frame indexes are even numbers into a sub-frame group 1, and setting the sub-frames of which the downlink sub-frame indexes are odd numbers into a sub-frame group 2.

7. The method according to claim 6, further comprising: when a number of the downlink sub-frames of the downlink FDD spectrum or downlink sub-frames of the uplink FDD spectrum, which are configured to send the downlink control information containing the A-CSI triggering signalling, is 1, and the A-CSI triggering signalling is enabled, triggering, by the evolved Node B through the A-CSI triggering signalling, reporting of the A-CSI on the downlink FDD spectrum and the uplink FDD spectrum.

8. The method according to claim 6, wherein triggering, by the evolved Node B, reporting of corresponding different A-CSI through the A-CSI triggering signalling when the A-CSI triggering signalling sent in different sub-frame groups is enabled comprises:
a manner 1: feeding back downlink channel state information corresponding to the downlink sub-frames in which the A-CSI triggering signalling is located; or,
a manner 2: feeding back downlink channel state information of downlink sub-frames of the uplink spectrum/downlink spectrum corresponding to the downlink sub-frames of the downlink spectrum/uplink spectrum in which the A-CSI triggering signalling is located; or,
a manner 3: feeding back the downlink channel state information of both the downlink spectrum and uplink spectrum corresponding to the downlink sub-frames in which the A-CSI triggering signalling is located.

9. The method according to claim 8, wherein, in the case that the downlink sub-frames are divided into two sub-frame groups,
the reporting for different A-CSI is performed in the manner 1 when the A-CSI triggering signalling sent in the sub-frame group 0 is enabled, and the reporting for different A-CSI is performed in the manner 2 when the A-CSI triggering signalling sent in the sub-frame group 1 is enabled; or,
the reporting for different A-CSI is performed in the manner 3 when the A-CSI triggering signalling sent in the sub-frame group 0 is enabled, and the reporting for different A-CSI is performed in the manner 1 when the A-CSI triggering signalling sent in the sub-frame group 1 is enabled.

10. The method according to claim 8, wherein, in the case that the downlink sub-frames are divided into three sub-frame groups, the reporting for different A-CSI is performed in the manner 3 when the A-CSI triggering signalling sent in the sub-frame group 0 is enabled, the reporting for different A-CSI is performed in the manner 1 when the A-CSI triggering signalling sent in the sub-frame group 1 is enabled, and the reporting for different A-CSI is performed in the manner 2 when the A-CSI triggering signalling sent in the sub-frame group 3 is enabled.

11. The method according to claim 6, wherein grouping the downlink sub-frames of the downlink FDD spectrum or the downlink sub-frames of the uplink FDD spectrum comprises:
when a number of the downlink sub-frames of the downlink FDD spectrum or downlink sub-frames of the uplink FDD spectrum, which are configured to send the downlink control information containing the A-CSI triggering signalling, is 2, dividing the sub-frames into two sub-frame groups; and
when the number of the downlink sub-frames of the downlink FDD spectrum or downlink sub-frames of the uplink FDD spectrum, which are configured to send the downlink control information containing the A-CSI triggering signalling, exceeds 2, dividing the sub-frames into two or three sub-frame groups.

12. The method according to claim 1, wherein, when the A-CSI triggering signalling is 2-bit, the A-CSI triggering signalling has four different values, and four corresponding manners for triggering reporting of the A-CSI at least comprises:
not triggering reporting of the A-CSI,
triggering reporting of the A-CSI on the downlink FDD spectrum,
triggering reporting of the A-CSI on the uplink FDD spectrum, and
triggering reporting of the A-CSI on both the downlink FDD spectrum and the uplink FDD spectrum; or,
not triggering reporting of the A-CSI,
triggering reporting of the A-CSI on the downlink FDD spectrum, and
triggering reporting of the A-CSI on the uplink FDD spectrum;
or,
not triggering reporting of the A-CSI,
triggering reporting of the A-CSI in a high-layer configured sub-frame group 1,
triggering reporting of the A-CSI in a high-layer configured sub-frame group 2, and
triggering reporting of the A-CSI in a high-layer configured sub-frame group 3.

13. The method according to claim 12, wherein downlink sub-frames in the high-layer configured sub-frame group comprise: the downlink sub-frames of at least one of the uplink FDD spectrum or the downlink sub-frames of the downlink FDD spectrum.

14. The method according to claim 2 or 3, wherein, when the downlink control information containing the A-CSI triggering signalling can be sent on the uplink FDD spectrum and on the downlink FDD spectrum, triggering, by the evolved Node B through the A-CSI triggering signalling, reporting of different A-CSI comprises:
triggering, by the evolved Node B through the A-CSI triggering signalling, reporting of the A-CSI on the uplink FDD spectrum, when the A-CSI triggering signalling sent in the downlink sub-frames of the uplink FDD spectrum is enabled, and triggering, by the evolved Node B, reporting of the A-CSI on the downlink FDD spectrum through the A-CSI triggering signalling, when the A-CSI triggering signalling sent in the downlink sub-frames of the downlink FDD spectrum is enabled; or,
triggering, by the evolved Node B through the A-CSI triggering signalling, reporting of the A-CSI on the uplink FDD spectrum and the downlink FDD spectrum, when the A-CSI triggering signalling sent in the downlink sub-frames of the uplink FDD spectrum is enabled, and triggering, by the evolved Node B through the A-CSI triggering signalling, reporting of the A-CSI on the downlink FDD spectrum, when the A-CSI triggering signalling sent in the downlink sub-frames of the downlink FDD spectrum is enabled; or,
triggering, by the evolved Node B through the A-CSI triggering signalling, reporting of the A-CSI on the uplink FDD spectrum and the downlink FDD spectrum, when the A-CSI triggering signalling sent in the downlink sub-frames of the downlink FDD spectrum is enabled, and triggering, by the evolved Node B through the A-CSI triggering signalling, reporting of the A-CSI on the uplink FDD spectrum, when the A-CSI triggering signalling sent in the downlink sub-frames of the uplink FDD spectrum is enabled; or,
triggering, by the evolved Node B through the A-CSI triggering signalling, reporting of the A-CSI on the uplink FDD spectrum, when the A-CSI triggering signalling sent in the downlink sub-frames of the uplink FDD spectrum is enabled, triggering, by the evolved Node B through the A-CSI triggering signalling, reporting of the A-CSI on the downlink FDD spectrum and the uplink FDD spectrum, when the A-CSI triggering signalling sent in the downlink sub-frames of the downlink FDD spectrum with the same sub-frame indexes with the downlink sub-frames of the uplink FDD spectrum is enabled, and triggering, by the evolved Node B through the A-CSI triggering signalling, reporting of the A-CSI on the downlink FDD spectrum, when the A-CSI triggering signalling sent in the downlink sub-frames of the downlink FDD spectrum with the same sub-frame indexes with the uplink sub-frames of the uplink FDD spectrum is enabled.

15. A method for controlling sending of channel state information, comprising:
receiving, by a User Equipment (UE), downlink control information containing Aperiodic Channel State Information (A-CSI) triggering signalling, the A-CSI triggering signalling being employed by an evolved Node B to trigger reporting of A-CSI on at least one of a downlink Frequency Division Duplexing (FDD) spectrum or an uplink FDD spectrum.

16. The method according to claim 15, further comprising:
receiving, by the UE, grouping, notified by the evolved Node B through high-layer signalling, of downlink sub-frames of the downlink FDD spectrum or downlink sub-frames of the uplink FDD spectrum, which are used for sending the downlink control information.

17. The method according to claim 15, further comprising:
determining, by the UE, grouping of the downlink sub-frames of the downlink FDD spectrum or downlink sub-frames of the uplink FDD spectrum, which are used for sending the downlink control information, in a preset manner negotiated with the evolved Node B.

18. An evolved Node B, comprising: a sending module, configured to send downlink control information containing Aperiodic Channel State Information (A-CSI) triggering signalling, wherein
the A-CSI triggering signalling is employed by the evolved Node B to trigger reporting of A-CSI on at least one of a downlink Frequency Division Duplexing (FDD) spectrum or an uplink FDD spectrum.

19. The evolved Node B according to claim 18, further comprising a grouping module, wherein when the A-CSI triggering signalling is 1-bit, the grouping module is configured to divide downlink sub-frames for sending the downlink control information into multiple sub-frame groups.

20. The evolved Node B according to claim 19, wherein the grouping module is further configured to determine grouping of the downlink sub-frames of the downlink FDD spectrum or downlink sub-frames of the uplink FDD spectrum, which are used for sending the downlink control information, in a preset manner.

21. The evolved Node B according to claim 19, wherein the grouping module is further configured to notify User Equipment (UE) of grouping of the downlink sub-frames of the downlink FDD spectrum or downlink sub-frames of the uplink FDD spectrum, which are used for sending the downlink control information, through high-layer signalling.

22. A User Equipment (UE), comprising: a receiving module, configured to receive downlink control information containing Aperiodic Channel State Information (A-CSI) triggering signalling,
wherein the A-CSI triggering signalling is employed by an evolved Node B to trigger reporting of A-CSI on at least one of a downlink Frequency Division Duplexing (FDD) spectrum or an uplink FDD spectrum.

23. The UE according to claim 22, wherein the receiving module is further configured to receive grouping, notified by the evolved Node B through high-layer signalling, of downlink sub-frames of the downlink FDD spectrum or downlink sub-frames of the uplink FDD spectrum, which are used for sending the downlink control information.

24. The UE according to claim 22, further comprising: a determination module, configured to determine grouping of the downlink sub-frames of the downlink FDD spectrum or downlink sub-frames of the uplink FDD spectrum, which are used for sending the downlink control information, in a preset manner negotiated with the evolved Node B.

25. A storage medium, comprising a set of instructions, which, when being executed, cause at least one processor to execute the operations according to any one of claims 1-14.

26. A storage medium, comprising a set of instructions, which, when being executed, cause at least one processor to execute the operations according to any one of claims 15-17.
